## Europäisches Patentamt

## European Patent Office

## Office européen des brevets

(11) Veröffentlichungsnummer: **0 223 027**
**B1**

(12) **EUROPÄISCHE PATENTSCHRIFT**

(45) Veröffentlichungstag der Patentschrift:
08.03.89

(21) Anmeldenummer: 86113605.9

(22) Anmeldetag: 02.10.86

(51) Int. Cl.⁴: **B23K 37/00**, B03C 3/49

(54) Verfahren zum Reinhalten eines Rohrrinnenraums beim Schweissen und Vorrichtung hierzu.

(30) Priorität: 06.11.85 DE 3539278

(43) Veröffentlichungstag der Anmeldung:
27.05.87 Patentblatt 87/22

(45) Bekanntmachung des Hinweises auf die Patenterteilung:
08.03.89 Patentblatt 89/10

(84) Benannte Vertragsstaaten:
AT CH DE ES FR GB IT LI NL

(56) Entgegenhaltungen:
DE-A- 3 234 200
DE-B- 1 162 814

(73) Patentinhaber: Nukem GmbH, Rodenbacher
Chaussee 6 Postfach 11 00 80, D-6450 Hanau 11(DE)

(72) Erfinder: Hilmar, Christ, Dr., Harzweg 10,
D-6450 Hanau 9(DE)
Erfinder: Jehl, Hans-Jürgen, Kastanienweg 18a,
D-8755 Alzenau(DE)

## Beschreibung

Die Erfindung betrifft ein Verfahren zum Reinhalten des Rohrinnenraums beim Verschweißen von Rohrabschnitten und eine Vorrichtung hierzu.

In der Halbleitertechnik werden extrem reine Gase benötigt, die größtenteils durch Rohrleitungen aus Metall transportiert werden. Diese Rohrleitungen müssen daher im Rohrinnern ebenfalls extrem rein sein, um die Gase nicht zu verunreinigen. Die Rohrabschnitte werden daher vor dem endgültigen Zusammenbau speziellen Reinigungsverfahren unterzogen.

Beim Verschweißen von Rohrabschnitten zu Rohrleitungen können je nach Stärke und Art der Schweißung im Rohrinnenraum während des Schweißvorgangs Metalldämpfe und Ausgasungen entstehen, die sich an der Rohrinnenwand niederschlagen. Solche Verunreinigungen sind bei Rohrleitungen mit extrem hohen Reinheitsanforderungen nicht tragbar. Diese Verunreinigungen können aber in den Leitungssystemen mit den heute zur Verfügung stehenden Mitteln und Verfahren nicht mehr im notwendigen Umfang beseitigt werden.

Es war daher Aufgabe der vorliegenden Erfindung, ein Verfahren zum Reinhalten des Rohrinnenraums beim Verschweißen von Rohrabschnitten zu entwickeln, bei dem während des Schweißvorgangs keine Verunreinigungen an den inneren Rohrwandungen sich absetzen können.

Außerdem sollte eine entsprechende Vorrichtung dazu geschaffen werden.

Diese Aufgabe wurde erfindungsgemäß dadurch gelöst, daß vor dem Schweißvorgang eine Hochspannungselektrode im Rohrinnern unmittelbar an die Schweißstelle gebracht und während des Schweißvorgangs ein elektrostatisches Hochspannungsfeld zwischen Hochspannungselektrode und Rohrwandung erzeugt wird, wobei der Pluspol des Hochspannungsgenerators mit der Hochspannungselektrode und der Minuspol mit der Rohrwandung verbunden werden, und die elektrische Spannung 1 bis 10% unterhalb der Durchschlagsspannung eingestellt wird.

Durch das Anlegen eines elektrostatischen Hochspannungsfeldes mit der entsprechenden Polung während des Schweißvorgangs werden die beim Schweißen im Rohrinnern entstehenden Metalldämpfe und Ausgasungen gezielt auf die Oberfläche des metallischen Elektrodenteils niedergeschlagen und nicht als Verunreinigungen auf der Rohrinnenwand abgeschieden. Die Rohrabschnitte verbleiben daher in ihrer ursprünglichen Reinheit und brauchen nicht nachgereinigt zu werden.

Nach dem Schweißvorgang wird die Hochspannungselektrode aus dem Rohrinnern herausgezogen und gereinigt.

Das Anlegen des Hochspannungsfeldes erfolgt mit Hilfe einer in das Rohrinnere eingeführten Hochspannungselektrode, vorzugsweise bestehend aus einem zylindrischen, metallischen und einem zylindrischen, elektrisch isolierenden, nichtmetallischen Teil, wobei der elektrisch isolierende Teil in einem Abschnitt konisch ausgebildet und durch verformbare Klemmbacken geführt ist. Vorzugsweise ist die Hochspannungselektrode mit Rollen versehen, mit denen sie im Rohrinnern geführt werden kann.

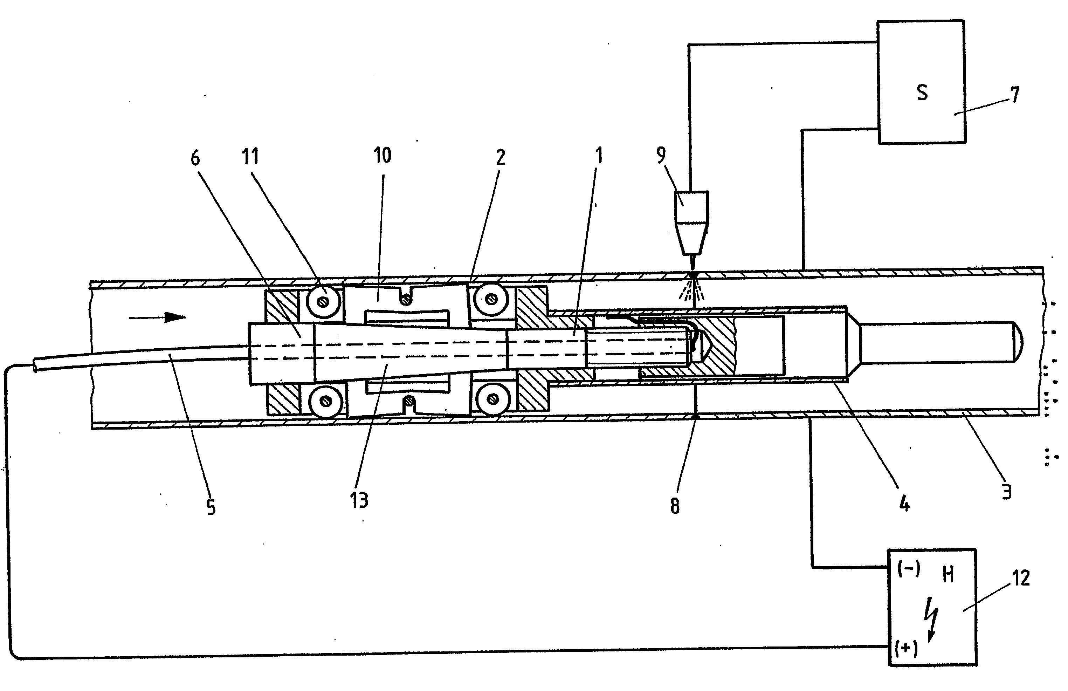

Die Figur zeigt schematisch eine beispielhafte Ausführungsform der Vorrichtung im Längsschnitt.

Die Hochspannungselektrode (1) besteht aus einem zylindrischen, metallischen Teil (4) und einem im wesentlichen zylindrischen, elektrisch isolierenden, nichtmetallischen Teil (6), der einen konischen Abschnitt (13) besitzt. Dieser konische Abschnitt (13) wird durch eine Bohrung von Klemmbacken (10) geführt, womit die Hochspannungselektrode (1) im Rohrabschnitt (2) fixiert werden kann. Die Führung der Hochspannungselektrode (1) in diesem Rohrabschnitt (2) erfolgt über Rollen (11), die am nichtmetallischen Teil (6) befestigt sind.

Beim Zusammenschweißen von zwei Rohrabschnitten (2, 3) wird zuerst die Hochspannungselektrode (1) in den Rohrabschnitt (2) soweit eingeführt, daß der metallische Teil (4) der Hochspannungselektrode (1) innerhalb der Schweißnaht (8) zwischen den beiden Rohrabschnitten (2, 3) sich befindet. Die Fixierung der Hochspannungselektrode (1) im Rohrabschnitt (2) erfolgt mittels der Klemmbacken (10), die durch den konischen Abschnitt (13) an die Rohrinnenwand gepresst werden. Über den Hochspannungsgenerator (12) und das Hochspannungskabel (5) wird eine elektrische Spannung an den metallischen Teil (4) der Hochspannungselektrode (1) und den Rohrabschnitt (3) gelegt. Die Hochspannung wird so gewählt, daß sie etwa 1 bis 10% unterhalb der Durchschlagsspannung liegt.

Die Schweißung erfolgt über das Schweißgerät (7) und die Schweißelektrode (9). Die während des Schweißvorgangs im Rohrinnern entstehenden Metalldämpfe und Ausgasungen werden vollständig auf dem mit dem Pluspol des Hochspannungsgenerators (12) verbundenen metallischen Teil (4) der Hochspannungselektrode niedergeschlagen, so daß sich keine Verunreinigungen im Rohrinnern absetzen können.

Die Hochspannungselektrode (1) ist so gestaltet, daß das Inertgas ungehindert an die Schweißnaht (8) herangeführt werden kann. Nach Beendigung des Schweißvorgangs werden durch einen leichten Zug am Hochspannungskabel (5) der konische Abschnitt (13) und die Klemmbacken (10) gelockert, so daß die Hochspannungselektrode (1) wieder aus dem Rohrabschnitt (2) entfernt werden kann. Anschließend wird die Oberfläche der Hochspannungselektrode (1) gereinigt, insbesondere der metallische Teil (4).

## Patentansprüche

1. Verfahren zum Reinhalten des Rohrinnenraums beim Verschweißen von Rohrabschnitten, dadurch gekennzeichnet, daß vor dem Schweißgang eine Hochspannungselektrode im Rohrinnern unmittelbar an die Schweißstelle gebracht und während des Schweißvorgangs ein elektrostatisches Hochspannungsfeld zwischen Hochspannungselektrode und Rohrwandung erzeugt wird, wobei der Pluspol des Hochspannungsgenerators mit der Hochspannungselektrode und der Minuspol mit der Rohrwandung verbunden werden, und die elektrische Spannung 1 bis 10% unterhalb der Durchschlagsspannung eingestellt wird.

2. Vorrichtung zum Reinhalten des Rohrinnenraums nach Anspruch 1, mit Hilfe einer Elektrode, bestehend aus einem zylindrischen, metallischen und einem zylindrischen, elektrisch isolierenden, nichtmetallischen Teil, dadurch gekennzeichnet, daß der elektrisch isolierende Teil (6) in einem Abschnitt (13) konisch ausgebildet und durch verformbare Klemmbacken (10) geführt ist.

3. Vorrichtung nach Anspruch 2, dadurch gekennzeichnet, daß der elektrisch isolierende Teil (6) mit Rollen (11) versehen ist.

**Claims**

1. A method of keeping the interior of pipe sections clean during the welding thereof, characterized in that, before the welding operation, a high-tension electrode is directly applied to the weld inside the pipe and an electrostatic high-tension field is established between the high-tension electrode and the pipe wall during the welding operation, the positive terminal of the high-tension generator being connected to the high-tension electrode and the negative terminal to the pipe wall and the electrical voltage being adjusted to between 1 and 10% below the breakdown voltage.

2. An apparatus for keeping the interior of pipe sections clean according to claim 1 using an electrode consisting of a cylindrical, metallic part and a cylindrical, electrically insulating non-metallic part, characterized in that the electrically insulating part (6) is conical in shape in one section (13) and is guided through deformable clamping jaws (10).

3. An apparatus as claimed in claim 2, characterized in that the electrically insulating part (6) is provided with rollers (11).

**Revendications**

1. Procédé pour le maintien de la propreté de l'intérieur de tubes lors du soudage de segments de tubes, caractérisé en ce qu'avant l'opération de soudage, on introduit à l'intérieur du tube une électrode à haute tension, exactement au point de soudure, et pendant l'opération de soudage, on engendre un champ de haute tension électrostatique entre électrode à haute tension et paroi du tube, en reliant le pôle positif du générateur de haute tension à l'électrode à haute tension et le pôle négatif à la paroi du tube, et on ajoute la tension électrique à 1–10% audessous de la tension de claquage.

2. Dispositif pour le maintien de la propreté de l'intérieur de tubes, selon la revendication 1, à l'aide d'une électrode, constitué d'un élément cylindrique métallique et d'un élément cylindrique non métallique, électriquement isolant, caractérisé en ce que l'élément électriquement isolant (6) a une partie (13) en forme de cône et est guidé par des mâchoires de serrage déformables (10).

3. Dispositif selon la revendication 2, caractérisé en ce que l'élément électriquement isolant (6) est muni de galets (11).